# EUROPEAN PATENT SPECIFICATION

(11) **EP 3 975 025 B1**
(45) Date of publication and mention of the grant of the patent: **30.07.2025**
(21) Application number: 21174881.9
(22) Date of filing: 20.05.2021
(51) Int. Cl.: G06F 21/62

(54) **SYSTEM AND METHOD OF GRANTING ACCESS TO DATA OF A USER**
SYSTEM UND VERFAHREN ZUR GEWÄHRUNG DES ZUGRIFFS AUF DATEN EINES BENUTZER
SYSTÈME ET PROCÉDÉ PERMETTANT D'AUTORISER L'ACCÈS À DES DONNÉES D'UN UTILISATEUR

(30) Priority: 24.09.2020 RU 2020131454; 17.03.2021 US 202117203856
(43) Date of publication of application: 30.03.2022
(73) Proprietor: AO Kaspersky Lab, Moscow 125212 (RU)
(72) Inventor: EFREMOV, Andrey A., Moscow 125212 (RU); SHMOYLOV, Dmitry V., Moscow 125212 (RU); FILONOV, Pavel V., Moscow 125212 (RU); IVANOV, Dimitry G., Moscow 125212 (RU)
(74) Representative: Chimini, Francesco

(56) References cited:
- US-A1- 2001 036 224
- US-A1- 2017 169 249
- US-A1- 2020 034 563

## Description

### FIELD OF TECHNOLOGY

The present disclosure relates to the field of data anonymization, protection of the confidentiality of data of a user, and ensuring privacy of the user.

### BACKGROUND

At present, the volume of data to be collected from users' devices continues to grow. At the same time, there is growth in the variety and number of the devices from which data is collected. The devices from which data is collected include Internet of Things (IoT) devices, personal computers, notebooks, and smartphones. The data is commonly collected from devices without any clear consent by the user. However, even if such consent is given, the user does not always understand all the consequences of his/her decision. Data collected from devices is subsequently distributed around the network in an uncontrolled way, and may cause harm to the user. For example, a user may become a victim of criminals who have obtained his/her telephone or credit card number. Moreover, malicious parties are not always the only ones that cause problems. For instance, unscrupulous employers may use data from users' devices to track their employees. Another result of uncontrolled data collection is the annoying targeting of advertisements for special categories of merchandise.

Device manufacturers attempt to defend the user from concealed data collection and to regulate data operations. One example is Google's Firebase system, which synchronizes data between different applications on Android devices and grants access to these data to a third party.

In products manufactured by Apple corporation, there is a similar platform that attempts to defend the user. The platform on Apple products is called the Apple Security Framework and its primary goal is to protect information, establish a trusted connection, and control access to software on a device. For example, the Apple Security Framework is used to establish a user's identity, ensure the security of data both in a storage and during transmission over a network, and confirm the validity of code.

### AMENDED DESCRIPTION - page 2 (Substitute copy)

However, the above device manufacturer attempts have shortcomings. The mechanisms to allow data from devices to be shared with third parties are not transparent for the user, are irreversible, and only provide weak protection against tracking by third-party applications. An example of a system and a method of granting access to data of a user is disclosed in US 2020/034563 A1.

Therefore, there is a need for a more optimal and effective way of granting access to data of a user while ensuring privacy.

### SUMMARY

Aspects of the disclosure relate to granting access to data of a user while ensuring privacy. The data is exchanged between a user's data storage and computing devices of parties interested in the data.

In one exemplary aspect, a method is provided for granting access to data of a user, the method comprising: blocking the processing of data of a user, transferring the data of the user to a storage device, receiving a request for data processing from a collected data processor of a device, redirecting the received request to the storage device, determining, by the storage device, data access rights for the collected data processor of the device from which the request for data processing is received in accordance with data access rights established by a data access rights manager, and providing access to the data in accordance with the determined data access rights.

In one aspect, the method further comprises detecting an absence of the requested data, and transferring information about the absent data to the storage device.

In one aspect, the transferring of the data of the user to the storage device is performed through at least one of a route modifier and an anonymizer, wherein the rout modifier analyzes the data in fields of data structure received from a data collector, divide the data structure into substructures in order to determine the state of the data, and select the route for sending data to the storage device for the resulting substructure, and wherein the anonymizer anonymizes user identifiers.

In one aspect, the request is processed without redirecting to the storage device when the collected data processor is on the list of trusted devices or when the request is related to a basic functionality accepted by a user device.

In one aspect, the blocking of the processing includes blocking at least one of: mobile and web tracking; collecting geolocation information; collecting search queries; and collecting registration data.

In one aspect, the blocking of the processing of the data blocks the processing by the collected data processor of an external device.

In one aspect, the request for data processing is received from the collected data processor implicitly by a blocker or directly by a data access rights manager, and wherein when the request is received by the blocker, the request is forwarded to the data access rights manager.

According to one aspect of the disclosure, a system is provided for granting access to data of a user, the system comprising a hardware processor configured to: block the processing of data of a user, transfer the data of the user to a storage device, receive a request for data processing from a collected data processor of a device, redirect the received request to the storage device, determine, by the storage device, data access rights for the collected data processor of the device from which the request for data processing is received in accordance with data access rights established by a data access rights manager, and provide access to the data in accordance with the determined data access rights.

The method and system of the present disclosure are designed to provide data security, while allowing the user's data to be transmitted between the computing devices of the parties interested in the data and any number of devices of the user from which the data is being gathered and transmitted.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
**Fig. 1** illustrates a system for exchanging data received from devices of a user.
**Fig. 2** illustrates an exemplary method for granting access to data of a user, wherein the access is granted to a computing device of a third party.
**Fig. 2a** illustrates an exemplary method for providing a user's data structure to collected data processor in the transmission of a data structure to a remote storage device from the user's device.
**Fig. 2b** illustrates an exemplary method for providing a user's data structure to collected data processor in the transmission of a data structure from storage device to a collected data processor.
**Fig. 3** illustrates an exemplary method for updating a user's data in a storage device.
**Fig. 3a** illustrates an exemplary method for updating a user's data in the transmission of a data structure to a remote storage device.
**Fig. 3b** illustrates an exemplary method for updating a user's data in the transmission of an updated data structure to a storage device.
**Fig. 4** illustrates an example for setting data permissions.
**Fig. 5** presents an example of a general purpose computer system on which embodiments of the invention can be implemented.

### DETAILED DESCRIPTION

Exemplary embodiments of the invention are described herein in the context of a system, method, and a computer program for granting access to data of a user. For instance, the method of the present disclosure may be used for exchanging data between a device of a user and a device of an entity interested in the user's data. Those of ordinary skill in the art will realize that the following description is illustrative only and is not intended to be in any way limiting. Other examples will readily suggest themselves to those skilled in the art having the benefit of the disclosure. Reference will now be made in detail to implementations of the example embodiments as illustrated in the accompanying drawings. The same reference indicators will be used to the extent possible throughout the drawings and the following description to refer to the same or like items.

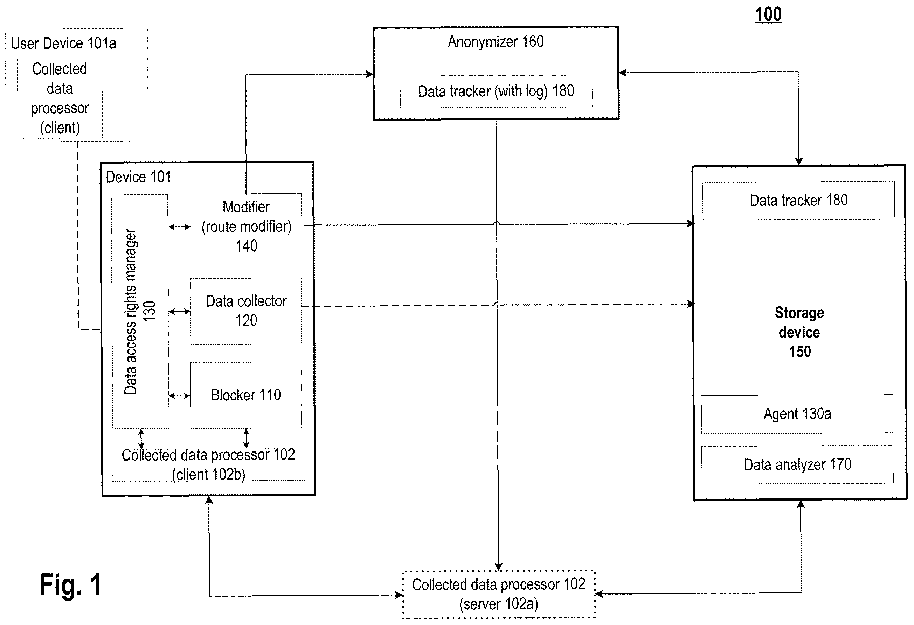

**Fig. 1** illustrates a system **100** for exchanging data received from devices of a user. The system **100** is intended for a transparent and secure processing of the data of users of any number of devices **101.** In the context of the present disclosure, "data of a user of a device" refers to data received from any number of devices in the user's environment. The data may be created on a device by various types of software, and includes both data input by the user and data created in the operation of programs and applications. For example, the data may be for a stream of clicks (also known as a "clickstream"), communications in messaging services, location data, data from smart home IoT devices, data from other IoT devices in the user's ecosystem, such as a private car, and the like.

In one example, the system **100** includes a blocker **110,** a data collector **120,** a data access rights manager **130,** a modifier **140,** a storage device **150,** an anonymizer **160,** data analyzer **170,** and a data tracker **180.**

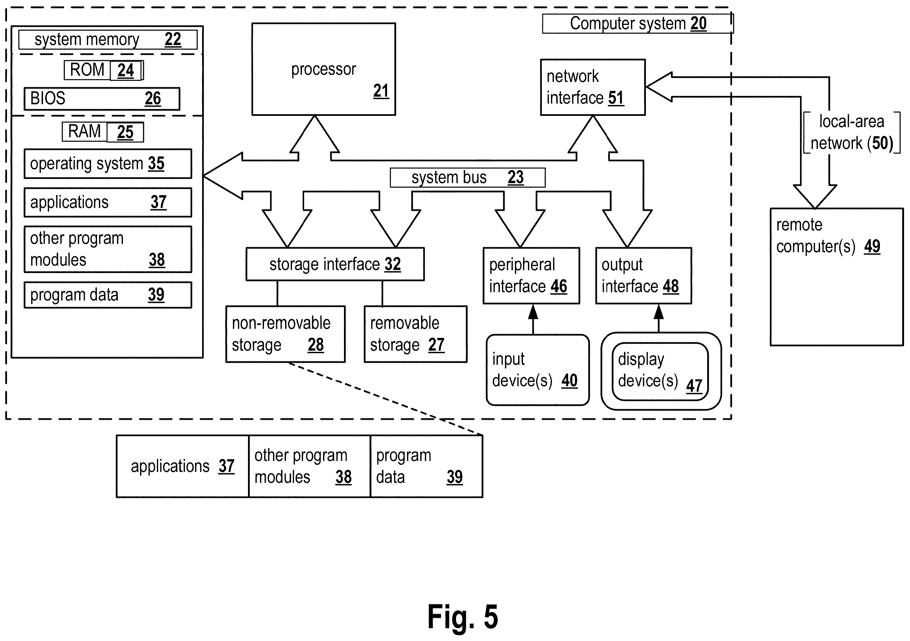

In the present disclosure, the blocker **110,** data collector **120,** data access rights manager **130,** modifier **140,** storage device **150,** anonymizer **160,** data analyzer **170** and data tracker **180** are considered to denote real devices, systems, components and groups of components constructed with the use of hardware such as integrated microcircuits (in English, "application-specific integrated circuit", ASIC) or programmable gate arrays (in English, "field-programmable gate array", FPGA), or, for example, in the form of a combination of software and hardware such as a microprocessor system and a set of program instructions, and also on neuromorphic chips (in English, "neurosynaptic chips"). The functionality of the various modules or components of the system **100** may be implemented solely by hardware, or additionally in the form of a combination in which some of the functionality is implemented by software and some by hardware. In one example, the various functionalities may be implemented on the processor of a general-purpose computer (as shown in **Fig. 5****,** for example). Databases may be implemented by any feasible methods and may be contained on a single physical medium or on various media located either locally or remotely.

The blocker **110** is intended to block the processing of data (including personal data) on the user's device by a collected data processor **102.** Blocking can be carried out on any collected data processor **102,** including third-party means and those belonging to the platform by which the device is controlled (for example, Apple, Google, Huawei and Xiaomi software) on which the blocker is installed, or which are accessible to the blocker. For example, the blocker **110** may be installed on a router through which the user's personal devices **101a** communicate with the internet, IoT devices. Then, the blocker analyzes the network traffic flowing through the router on which the blocker **110** is installed. A particular case of a collected data processor may be a client **102b** (for example, an application) that collects the user's data **101** on the device at the request of a server **102a** connected to the application in the context of a client-server interaction. "Data processing" refers to any action (operation) or combination of actions (operations) carried out with the use of data automation means (e.g., computing devices), including the collection, recording, arrangement, accumulation, storage, adjustment (updating, changing), extraction, use, transmission (distribution, supply, access), depersonalization, blocking, removal and deletion of data.

In one example, the collection of critical data is blocked, rather than the collection of any data. Critical data include data in respect of which the law or an authorized party imposes restrictions on collection, storage, access,, distribution and processing. Critical data is usually sensitive to disclosure, distribution, or leakage. Occurrences of disclosure, distribution and/or leakage typically results in an infringement of the rights and legally protected interests of parties. Moreover, the occurrences of these types of events may create a for parties who have permitted the infringement of the rules for collection, storage, access, processing specified for these data to occur. A particular case of critical data is that of confidential data ("sensitive data"). In the context of the present disclosure, confidential data and confidential information are synonymous. Confidential data includes data stored in accordance with the law of the country whose jurisdiction covers the user of the device (i.e., the client in the system described above).

In one example, confidential data include personal data (PD) and data containing:
- commercial secrets;
- tax secrets;
- banking secrets;
- medical secrets;
- notarial secrets;
- legal secrets;
- auditing secrets;
- communications secrets;
- insurance secrets;
- testamentary secrets;
- adoption secrets;
- confessional secrets;
- investigation secrets;
- judicial secrets;
- information about protected persons; and
- government secrets.

In one example, the processing of a user's data for marketing purposes is blocked.

In another example, the processing of any of a user's data by the collected data processor **102** is blocked where the data are not concerned with the direct functionality of applications or programs using these collected data processor **102.** In another example, any processing by the collected data processor **102** not included on the list of permitted (trusted) devices or servers is blocked. The blocking of data processing may be carried out by various methods directly or indirectly. When the blocking of data processing is performed directly, the actions associated with the data processing are blocked. When the blocking of data processing is performed via an indirect blocking method, the data processing is not directly impeded, but the processing does not achieve its objectives even though it is executed. In one example, a direct blocking method includes prohibiting access to a user's data by the collected data processor **102.** In one example, an indirect processing method includes a method for disabling links between data to be sent from a device of a user and the identifier of the user. For example, the method may remove cookie files or spoof the identifier of the user that is set up by tracking networks on the device of the user.

The data access rights manager **130** is intended to manage access to data. The data access rights manager **130** formulates the rights of the collected data processor **102** to access data, withdraws data access rights from collected data processor, and creates lists of permitted (trusted) collected data processors **102.**

The data access rights manager **130** stores or establishes the structure format (data model) for the user's data specified for allocation on the storage device **150.** In one example, the data access rights manager **130** may be customized by external updatable policies or by user policies or directly by the user's input. The data access rights manager **130** also updates the user's data model specified for sending to the storage device (operating scenarios will be described below). The data model may be using known techniques for data organization.

The data collector **120** is intended to collect data of a user which is specified as being data suitable for transmission to the storage device **150** from the user's devices. The data collector **120** receives fields of data structure from the access rights manager **130,** and completes the received fields of the data structure . The data collector **120** then transfers the completed data structure to the modifier **140.** In one example, the data collector **120** sends the completed data structure to the storage device **150** directly. Usually, the blocking by the blocker **110** and the collection of data by the data collector **120** take place independently of the data requirements of the collected data processor **102.** For example, according to the settings, the blocker **110** blocks web tracking, and the data collector **120** collects all the data whose processing was blocked in advance (before the attempted processing by the means **102)** on the device **101** by the blocker **110;** the collected data are then stored in the storage device **150.**

In one example, the device **101** comprises a modifier **140** which is intended to: analyze the data in the fields of the structure received from the data collector **120;** in order to determine the state of the data, divide the data structure into substructures; and for the resulting substructures, select the route for sending data to the remote storage device. The modifier **140** determines the necessity of dividing the structure into substructures according to the fields of the structure. There may be various criteria for the division of the data structure into substructures, one of these criteria being the presence of personal data ("Personal Identification Information" (PII)) or special categories thereof (according to the terminology of General Data Protection Regulation (GDPR), for example). When personal data is present, the data structure is divided in such a way that one substructure contains personal data or special categories thereof, while the other substructure contains data that are not personal. The relationship of the data to personal data is determined, for example, by the law of the country whose jurisdiction covers the user of the device that constitutes the client in the system described (in other words, according to the location of the data source). Another, more general, criterion is the presence of critical data. In a particular case, the modifier **140** is intended to convert the data structures on the device before sending the data to the storage device **150.** In one example, the methods for converting the data substructures include:
- quantization;
- sorting;
- merging (pasting);
- grouping;
- adjusting the data set;
- tabular data substitution;
- calculated values;
- data encoding;
- encryption;
- convolution; and
- normalization (scaling).

Some kinds of conversion may be used not only for individual data (fields) in a substructure, but also for a substructure as a whole, for example tokenization and/or encryption. In one example, the conversion is performed such that reversing the conversion is not possible without the use of the modifier **140** and/or the storage device **150.** In this case, the term "conversion" refers to a transformation or mapping of a quantity to another quantity, e.g., using a function that operates on the first quantity to obtain a second quantity.

In one example, the modifier **140** selects a network route along which the structure or substructure will be sent to the storage device **150.** This route may include an anonymizer **160.** The anonymizer **160** is intended to convert the structures and substructures passing through it by both direct and reverse conversion (examples will be discussed below). The anonymizer is not located in a single local network or intranet (the network of a single organization, for example) with the device **101,** and in a particular case with the storage device **150.** The data tracker **180** is connected to the anonymizer and to the storage device **150.**

The data tracker **180** is intended to track operations with the user's data and to record all acts of retrieval of the user's data from the storage device **150.** The data tracked **180** maintains a log of retrieval of the user's data. Based on the content of the log, the data tracker **180** checks the legality of the use of the user's data by third parties. For example, the history of the user's search queries may be transmitted to a network N without the right of transmission to third parties, as recorded by the data tracker **180.** Suppose subsequently, the user receives advertising offers from network M, wherein the advertising offers are based on the user's search queries, as recorded by an additional means of the system **100** (not shown in **Fig. 1****).** Then, based on the data obtained from the user's device and the content of the data tracker **180,** the system **100** records the incident. This incident may be processed subsequently according to supplementary devices (add-ons) of the system **100.** For example, the supplementary devices of the system **100** may perform any of: creating a complaint to be sent to network N, sending a demand to network M demanding for a removal of the data, sending information to a regulator, etc.

The storage device **150** is intended for the location of data of a user. The storage device may transfer the user's data to the collected data processor **102** and also allow the data to be processed without direct transmission in the storage device **150.** The storage device **150** is connected to a data analyzer **170.** The data analyzer 170 is intended to be used for an automated data analysis, based on the data analysis, constructing various analytical accounts, aggregating results, and storing the aggregated results in the storage device **150.** In one example, the aggregated results may be transferred to an external collected data processor **102,** if the latter has rights for accessing the aggregated results. The data analyzer **170** also links the data from various devices **101** of a single user/household. The storage device **150** is also connected to a data access rights manager **130** (through an agent **130a,** for example), since the storage device determines the rights of access of the collected data processor to the user's data.

The storage device **150** may be located in the device **101,** in the local network of the device **101,** or remotely, as shown in **Fig. 1****.** In a particular case, the storage device receives the user's data, including data from collected data processor. For example, it receives data from the collected data processor of social networks, online and offline retail stores, advertising networks, data exchanges, and others.

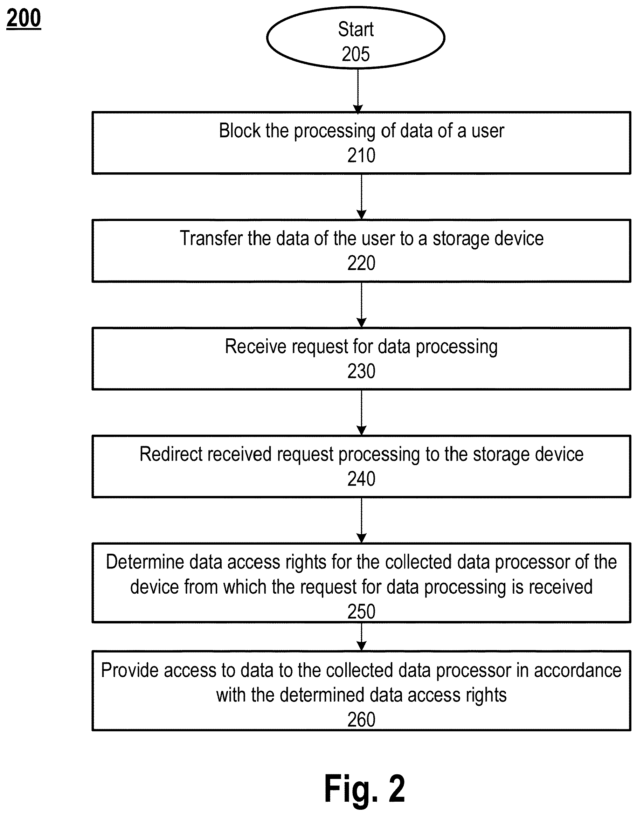

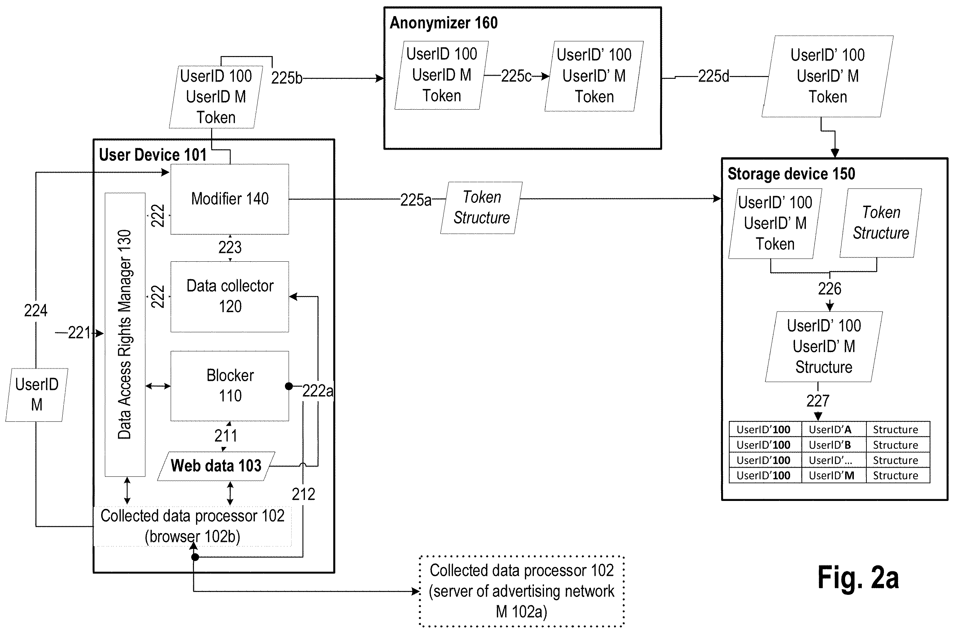

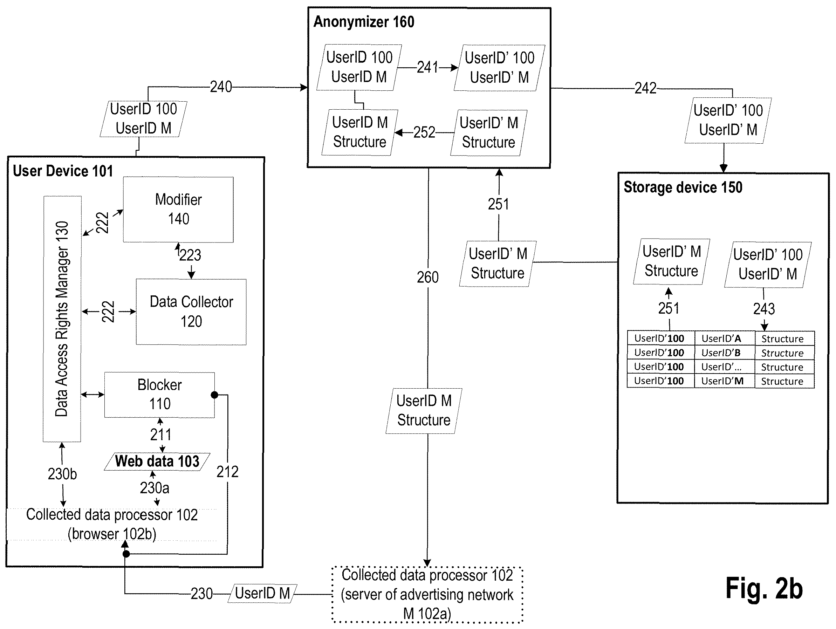

**Fig. 2** illustrates an exemplary method **200** for granting access to data of a user. The access is granted to a computing device of a third party. In one example, the method **200** for granting access to the data of the user starts in step **205** and proceeds to step **210.**

In step **210,** by the blocker **110,** method **200** blocks the processing of the data of the user at the user's devices for a collected data processor **102.**

In one example, the blocking of the processing of the data of the user comprises: blocking a predetermined list of processing methods for usage by any collected data processor.

In one example, the blocking of the processing includes the blocking of at least one of:
- mobile and web tracking, for example, by:
   - tracing and removing trackers from devices, and/or
   - using a VPN service enabling trackers and advertisements to be cut out of the network traffic;
- collecting geolocation information, for example, by:
   - using virtual operators,
   - spoofing geolocation, and/or
   - switching off GPS, Wi-Fi and Bluetooth modules when they are not being used by the user;
- collecting search queries, for example, by:
   - using private search systems (for example, DuckDuckGo),
   - proxying outgoing search queries,
   - spoofing the identifiers of search systems in outgoing traffic, and/or
   - removing the identifiers of search systems in outgoing traffic;
- collecting registration data, for example, by means of:
   - anonymous telephone numbers and mailboxes, and/or
   - anonymous one-time maps.

In step **220,** by the data collector **120,** method **200** collects the data of the user and transfers the collected data to a storage device **150.** In one example, the collected data comprises data that is blocked from being processed by an external collected data processor **102.** The blocking of the data from being processed by the external collected data processor **102** is performed in accordance with current policies specified by a data access rights manager **130.** In one example, the data collector **120** collects and transfers data to the storage device **150** using a data model and structure described above.

In one example, the data collector **120** transfers the data to the storage device **150** through a route modifier **140** and/or an anonymizer **160.**

In one example, access to these data, by collected data processor **102,** may only be received from the storage device **150.** For example, the collected data processor **102,** may not be on the list of permitted devices. For instance, the data may not be necessary for carrying out basic functions of the collected data processor **102.**

In step **230,** the system **100** receives a request for processing the data of the user on the user device **101.** This request may be received by various means of the system **100,** depending on the method for its implementation. For example, if there is an attempt to process the user's data on the device, this is detected by the blocker **110** (implicit request). For an explicit request, permission for processing this request will be received by the data access rights manager **130.**

In one example, when the data processing request is received by the blocker **110,** the request is redirected to the data access rights manager **130.**

In one example, when device **101** is known to the system **100** (if rights have already been allocated to device **101),** the method proceeds to step **240.** In step **240,** the request is redirected to the storage device **150** in which the data of the user is stored.

In another example, when the collected data processor **102** is not known to the system, the access rights are determined for the collected data processor **102.** Then, the method proceeds to step **240.**

In step **240,** method 200 permits the collected data processor **102** to process the user's data without redirecting the request to the storage device **150.**

In one example, method **200** permits the collected data processor **102** to process the user's data without redirecting the request when at least one of the following conditions is met: the collected data processor **102** is on the list of trusted devices; access to the data takes place in a context of a basic functionality accepted by the user; or similar scenario mentioned above,.

In step **250,** the storage device **150** determines the data access rights of the collected data processor to the user's data, and for which purpose the storage device **150** may use the stored copy of the data access rights for the collected data processor **102.** In one example, the storage device **150** stores the copy of the data access rights which were previously determined by the data access rights manager **130** for use during this step. In another example, the storage device **150** contacts the data access rights manager **130** directly when the information is needed, through the agent **130a,** for example. Thus, the storage device **150** may not be relying on a previously stored copy. After the determination of the data access rights, the method proceeds to step **260.**

In step **260** access to the user's data is granted to the collected data processor in accordance with the determined rights. In a particular case, access is granted through the anonymizer, which executes the reverse conversion of the user's data located in the storage device **150.** Information about this is recorded by the data tracker **180,** the recording in a particular case being based on blockchain technology, and the technology for providing data for processing from the user to the collected data processor **102** may be implemented as a smart contract, in which the incoming offer from the owner of the collected data processor in a particular case is the cashless use of an application/program functionality (user's data in exchange for the functionality). In this example, after access to the processing of the user's data has been received, the user who has granted access to his data may use the functionality of a certain application or service, or he will be able to access any other product or service, optionally encrypted (for example, an insurance discount in the case of providing remote metering from a car).

**Fig. 2a** shows an exemplary method for providing user's data to a collected data processor **102.** The blocker **110** blocks the processing of data for an advertising network **M.** In one example, the blocking comprises at least one of: removing from web data **103,** including data created by a browser **102b** and cookie files containing an advertising identifier, as shown in step **211;** and spoofing the user's identifier in the advertising network **M** in network traffic, as shown in step **212.** This impedes the operation of the collected data processor **102,** which in the present case is used for user profiling (i.e., the collected data processor **102** is a profiling means). Thus, the advertising network will not be able to carry out targeting since it does not have the user profile. In turn, the reduction in the targeting results in a marked reduction in conversion (the number of clicks on an advertising announcement). Since the operating model of the advertising network is cost per click (CPC), there is a corresponding decline in average revenue per user (ARPU ). Similar blocking is may be used by the user, since the user wishes to avoid the appearance of advertising for certain categories X of goods in his browser (for example, medicines, medical clinics and other items in the "health" category). However, the user may be prepared to receive targeted advertising for other categories of goods and services from said advertising network **M.** Thus, after the specified settings, in step **221,** the data access rights manager **130** creates (establishes) access rights for the network **M,** wherein the access is for granting access to a history of search queries and clickstream, while excluding all search queries and clicks related to category X. The relevant information is sent to the various components of system **100**,in step **222;** in particular, the data collector **120** receives the data structure with fields for completion, the modifier **140** receives categories of data whose transmission is prohibited, and the storage device **150** receives the access rights for the advertising network **M.** In particular cases, various scenarios are then possible, for example:
- the data collector **120** collects all the search queries and clicks from the user's devices **101,** all the data are sent to the storage device **150,** and the storage device **150** independently creates (or in a particular case completes) the structure for processing by the collected data processor **102** of the advertising network **M** in accordance with the access rights, having excluded the clicks and search queries from category X;
- the data collector **120** collects all the search queries and clicks from the user's devices **102,** all the data are sent to the modifier **140,** and the modifier **140** removes substructures relating to category X and moves the modified structure to the storage device **150,** and in this form it will be transferred to the collected data processor **102** of the advertising network **M;**
- the data collector **120** collects the search queries and clicks not relating to category X and moves the structure to the storage device **150,** and in this form it will be transferred to the collected data processor **102** of the advertising network **M;**
- the data collector **120** collects the search queries from all categories and the clicks not relating to category X, and the structure is transferred to the modifier **140,** the modifier **140** removes search queries relating to category X from the received structure and transfers the modified structure to the storage device **150,** and in this form it will be transferred to the collected data processor **102** of the advertising network **M** (the example in **Fig. 2a****,** which will be examined subsequently, relates to this scenario).

As a general rule, such scenarios apply not only to clicks and search queries, but also to other types of user's data, where this is possible, the collected data processor **102** do not only relate to advertising networks, and the user may have more than one device. In a particular case, when the storage device **150** is located in a remote unit, as in **Fig. 2a****,** the modified structure from the modifier is not sent directly to the storage device **150.**

An example according to the last scenario is examined further below. After the rights for the collected data processor **102** of network **M** have been drawn up by the means **130** in step **221,** the data access rights manager **130** transfers the format of the structure to the data collector **120** for the completion of the fields in step **222.** The structure comprises at least a "search queries" field and a "clickstream" field, and in turn the clickstream field comprises a field of categories of web resources in which a field for category X is absent. In step **222a,** the data collector **120** completes the fields. The data for the completion in a particular case are selected from the retained web data **103** accumulated in the course of the user's network activity. These data are formulated both by the browser **102a** and by additional components of the system **100,** such as plug-ins in the browser or UI interceptors (these are not shown in **Fig. 2a****,** and in a particular case are modules of the data collector **120).** In step **223,** the data collector **120** transfers the completed structure to the modifier **140,** which in turn, on the basis of the structure format received also in step **222** from the data access rights manager **130,** analyzes the fields of the search queries for the presence of queries relating to category X, after which the query data are removed. In step **224,** the modifier **140** receives from the collected data processor **102** the user identifier in the advertising network **M** (UserIDM) (from the cookie file or from a profile in the browser, for example) and the user identifier in the system **100** (UserID100) from the data access rights manager **130** (not shown in **Fig. 2a****).** The structure with the user's data is then encrypted with a public key, and a pair of identical random tokens is generated, one of the tokens being linked to the identifiers while the second token is linked to the user's data structure (for example, it is added in an additional field to the structure, this step not being shown in **Fig. 2a****).** In step **225a,** the user's data structure is then sent to the storage device **150,** and the identifiers with the second token are sent to the anonymizer **160** in step **225b.** The anonymizer **160** converts the identifiers in step **225c,** and the converted identifiers UserID' 100 and UserID'M are transferred in step **225r** to the storage device **150.** In the storage device **150,** the identifiers are linked with the user's data structure on the basis of identical tokens in step **226.** The storage device **150** links the received data structure with other data structures for this user in step **227.** The conversion means **160** changes the original user identifier in the system **100** and the identifier for the advertising network M, in order to protect the user's data in case of a data leak from the storage device **150,** since the data owner cannot be recognized with the changed identifiers. The data requests from the advertising network M for the processing of the data are redirected to the storage device **150** through the anonymizer **160,** as shown in **Fig. 2b****.** As can be seen in **Fig. 2b****,** the request can be directed by the server through the client in step **230,** or by the client itself in accordance with its functionality in step **230a** and/or in step **230b.** In a particular case, the request comprises a user identifier in the advertising network Mm, UserIDM. In step **240,** the request is redirected to the anonymizer **160.** When the request is redirected, the user identifier in the system **100** is attached to the request, and, in a particular case, information about the requested data, for example the enumeration of the fields of the structure is added; there may be various formats such as XML, JSON, etc. In step **241,** the anonymizer **160** converts the user identifier in the system **100** and the identifier in the advertising network M, and it transfers the converted identifiers to the storage device in step **242.** The storage device **150** detects, in step **243** the data linked to the user, on the basis of UserID' 100, and determines the rights for the advertising network **M** in step **250** (not shown in **Fig. 2b****),** and the storage device **150** prepares the data for processing by the collected data processor **102** in accordance with the access rights. In the present example, this takes place by means of the detection of UserID'M and the data structure related thereto. When the data are detected, they are returned, together with the UserID'M, to the anonymizer **160** in step **251,** the anonymizer **160** returns the original value to the user identifier in the network **M** in step **252,** and the user's data, together with the original UserIDM, is transferred to the collected data processor **102** of the advertising network, while the occurrence of the transmission is recorded by the data tracker **180.**

In a particular case, the advertising network may contact the anonymizer directly without the redirection of requests by the device **101,** while in the present case the collected data processor itself redirects the request: instead of the device it contacts the storage device, in a particular case through the anonymizer **160.** In another particular case, the data are not transferred to the collected data processor **102,** but access to a copy of the data placed in the storage device 150 is granted.

In one example, the present disclosure also describes a method **300** for updating the user's data. The system shown in **Fig. 1** is also used for implementing the method **300.** This method is implemented when not all the data for processing are placed in the storage device and/or when the user has more than one device from which data may be received. In method **300,** steps **210, 230, 240** and **250** are similar to the steps of the method shown in **Fig. 2****.**

In step **310,** by the storage device **150,** method **300** detects that the data for which the collected data processor have received access rights are not located in the storage device.

In step **320,** method 300 transfers information about the absent data to the storage device **150.** In a particular case, when the absence of the data is detected, the storage device **150** contacts the data access rights manager **130.** The data access rights manager **130** updates the data model, in accordance with which the data collector **120** completes new fields in the structure (in our example, those relating to the location). The data access rights manager **130** then sends the data to the storage device **150.** In a particular case, the data are sent with the use of the modifier **140** (the modifier **140** carries out an analysis of the data for criticality and other conformity with the rights established by the data access rights manager **130)** and the anonymizer **160,** if the detected data require further conversion.

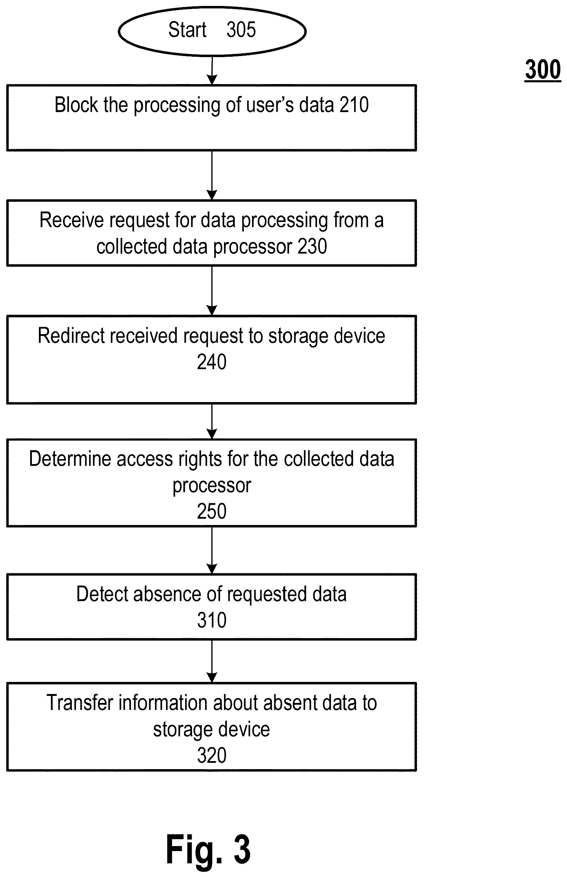

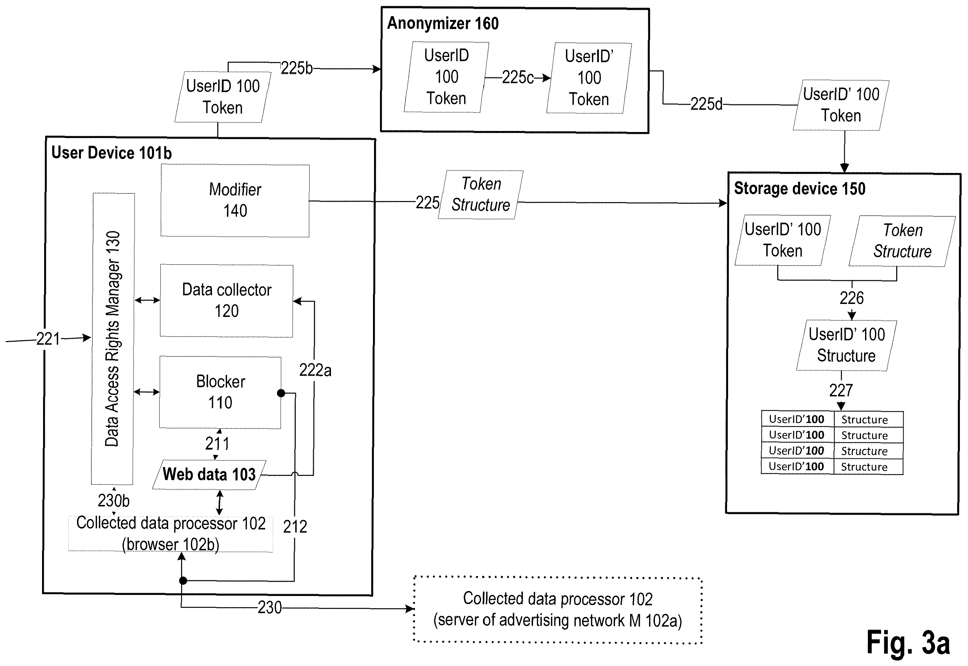

**Fig. 3a** an exemplary implementation of the method **300** for updating the user's data. The example with the advertising network **M** will be examined further. In the present case, however, the system **100** operates according to the following scenario:
- web tracking is blocked in advance (steps **211, 212)** in the device **101b** (a PC, in our example),
- the data collector **120** collect all the user's search queries and clicks in step **222a** (as the most widespread data for processing),
- the collected data is sent to the storage device **150** (steps **225a** - **227),** and the storage device **150** then independently creates the structure for processing by the collected data processor in accordance with their access rights.

In addition to information on search queries and clicks, the advertising network **M** in the present example has requested information on the location: in step **230,** the server **102a** sent a request to the client **102b,** which sent it to the data access rights manager **130** in step **230b.** The user issued this permission in step **221,** and the data access rights manager **130** drew up rights, including rights to location data.

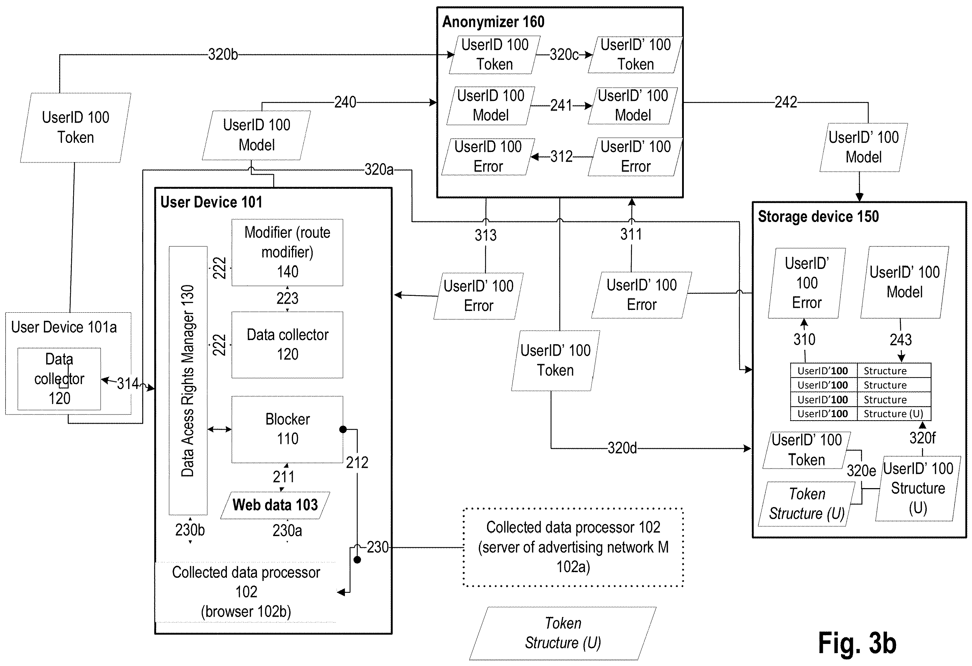

Since the storage device **150** independently creates or completes data structures for processing by the collected data processor **102,** in step **240** (here and hereafter, see **Fig. 3b****),** when the request is redirected, through the user identifier UserID100, information about the data to which rights have been drawn up for the advertising network M is added to the request, in the form of fields of the data structure for example (in **Fig. 3b****,** this is denoted "Model"). In step **242,** the storage device **150** receive the converted user identifier UserID'100 and the fields of the data structure from the anonymizer **160.** In step **243,** it finds the user's data located in the store. The storage device **150** then determines the access rights to the data, for which, in our example, the means **150** compares the fields of the structure (taken from the "Model") attached to the request with the data located in the storage device, and in step **310** detects (not shown in **Fig. 3b****)** that the information about the user's location UserID'100 has not been placed on the means **150** (as a result, a completion error, for example, appears). The storage device **150** contacts the data access rights manager **130** with a request for data shown in the structure but absent from the means **150.** The data access rights manager **130** is contacted, for example, through an agent **130a,** which in step **311** will contact the anonymizer **160** and convert the identifier UserID' 100 in the request to the original UserID 100 with the aid of the anonymizer **160** in step **312,** and will transfer the request to the data access rights manager **130** in step **313.** According to the results of the request from the storage device **150,** the data access rights manager **130** updates the information about the data to be collected, where the updating includes at least two steps:
- detecting, among the user's devices, the devices that may provide the requested data (in the example examined here, it is a mobile telephone **101a);**
- updating the fields of the structures (in our example, adding the "location" field) for the data collector **120,** particularly in the devices where fields containing the requested data are added; in the example under examination, this is in step **314.**

In step **320,** the storage device then receives the requested data. In the example under examination, step **320** from **Fig. 3** consists of a number of sub-steps **(320a - 320f)** in **Fig. 3b****.**

In step **320a,** the updated user's data structure with information including the location is sent to the storage device **150,** and the user identifier in the system **100** with the second token is sent to the anonymizer **160** in step **320b.** The anonymizer **160** converts the identifier in step **320c,** and the converted identifier UserID' 100 is transferred in step **320d** to the storage device **150.** In the storage device **150,** the identifier is linked with the updated user's data structure on the basis of identical tokens in step **320e.** The storage device **150** then links the received data structure to other data structures for this user in step **320f.** The storage device can then complete the necessary fields at the request of the collected data processor **102.**

An example of the implementation of the method **200** for providing user's data to collected data processor will now be examined on the basis of **Figs. 2a** - **2b****.** The blocker **110** blocks the processing of data for an advertising network **M;** more specifically, it blocks the collection of URL addresses/resources that the user visits (clickstream) and the history of search queries. The blocking is carried out by:
- in step **211,** removing from the web data **103,** including data created by a browser **102b,** cookie files containing a temporary user identifier in the advertising network **M** installed by scripts on web pages;
- in step **212,** in the network traffic, spoofing the permanent user identifier in the advertising network M, which is identical to the log-in of the account with which the user has entered the browser;
- spoofing the identifier of the browser installation **102b** in the network traffic.

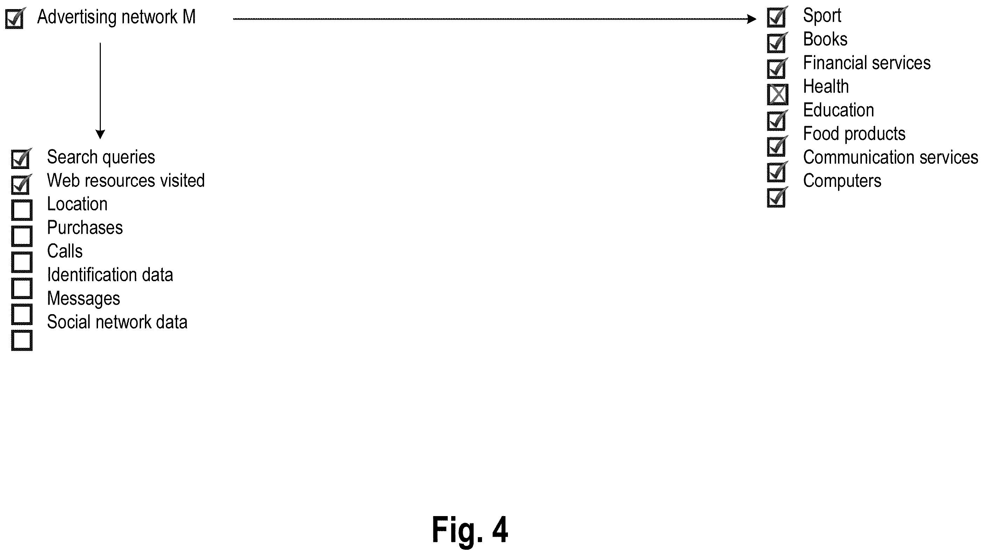

On the basis of the clickstream and search queries, the advertising network **M** carries out profiling, followed by targeting of advertising messages. Thus the advertising network will not be able to carry out targeting since it does not have the user profile, resulting in a marked reduction in conversion (the number of clicks on an advertising announcement), and since the operating model of the advertising network is cost per click (CPC), there is a corresponding decline in average revenue per user (ARPU) (. Similar blocking is used by the user, since the user wishes to avoid the appearance of advertising of goods in the "health" category in his browser (for example, medicines, medical clinics and other items from the "health" category). However, the user is prepared to receive targeted advertising for other categories of goods and services from said advertising network **M** ("Sport", "Education", "Books", ..., "N"). The user is prepared to share only the history of search queries and the web resources visited for profiling. The setting data are specified, in step **221,** and an example of such settings is shown in **Fig. 4****.** The system **100** also blocks any advertising announcements not wanted by the user, by the blocker **110.** In step **212,** it will remove advertising data with unwanted content from the traffic, and block the loading of advertising data with unwanted content, namely advertising data relating to the "health" category is blocked from being loaded and removed.

Thus, after the specified settings, in step **221,** the data access rights manager **130** creates access rights for the advertising network **M** to the whole history of search queries and the clickstream, excluding search queries and clicks relating to the "health" category. The information relating to this is sent out to the various components of the system **100** in step **222.**

In step **222,** the data collector **120** receives the data structure with fields for completion, and the structure comprises the following fields:
- search queries;
- web resources visited, e.g., art, entertainment, business, games, general, job seeking, etc.

In step **222,** the data collector **120** is ordered to collect all the search queries and all the web resources visited that cannot be assigned to the health category. Profiling for targeting advertising materials in the "health" category may be used by various categories of web resources, and therefore the data access rights manager **130,** when creating a structure for the data collector **120,** reduces the general category of "health" to more partial categories (subcategories) of web resources, and does not include them in the fields of the structure for the data collector **120,** for example, such subcategories of web resources as medicines, medical services, medical information portals and the like. For example, the structure may look like this:

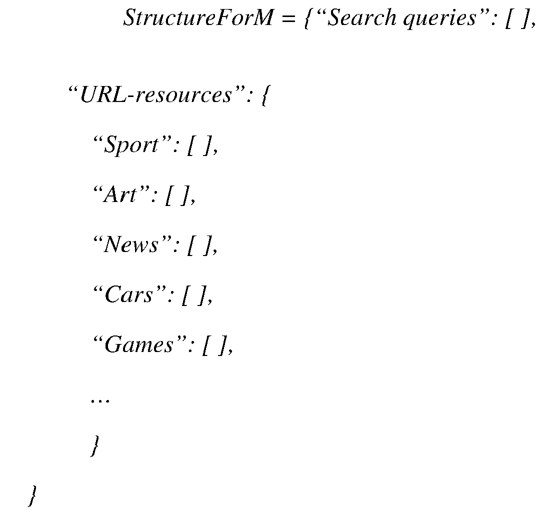

In step **222,** the modifier **140** receives the categories of search queries whose transmission is prohibited. The modifier **140** uses a natural language processing technology to analyze and classify the search queries. In step **222,** the storage device **150** also receives the access rights for the advertising network **M.**

Then, in step **222a,** the data collector **120** collects the search queries from all categories and the web resources visited that do not relate to the "health" category, and completes the fields of the structure. The data for the completion of the structure are selected by the data collector **120** from the retained web data **103** accumulated in the course of the user's network activity. These data are created both by the browser **102a** and by additional means of the system **100,** such as plug-ins in the browser or UI interceptors (these are not shown in **Fig. 2a****,** and are modules of the data collector **120).**

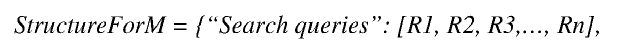

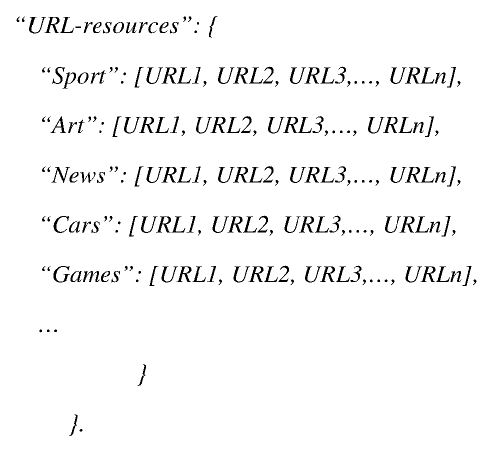

In step **223,** the completed structure is transferred to the modifier **140.** On the basis of the information about the prohibited categories received in step **222** from the data access rights manager **130,** the modifier **140** analyzes the fields of the search queries for the presence of queries relating to the "health" category. The search queries relating to the "health" category (in the present example, this is query R3) are then removed from the received structure.

In step **224,** the modifier **140** receives from the collected data processor **102** the user identifier in the advertising network **M** (UserIDM) from the cookie file or from a profile in the browser, and the user identifier in the system **100** (UserID100) from the data access rights manager **130** (not shown in **Fig. 2a****).** The structure with the user's data, comprising the search queries and URL-resources, is encrypted with a public key (Rn→Rn', URLn→URLn'). The modifier **140** generates a pair of identical random tokens. One of the tokens is linked to the identifiers UserIDM and UserID100:

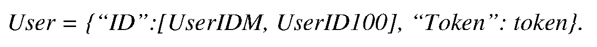

The second token is linked to the user's data structure (it is added in an additional field to the structure) as follows:

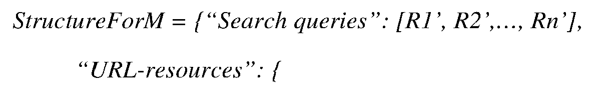

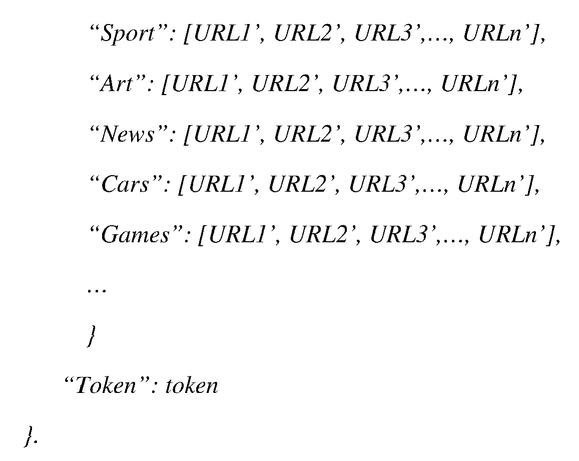

In step **225a,** the user's data structure is then sent to the storage device **150,** and the identifiers with the second token are sent to the anonymizer **160** in step **225b.**

The anonymizer **160** converts the identifiers in step **225c.** The anonymizer **160** changes the original user identifier in the system **100** and the identifier for the advertising network **M,** in order to protect the user's data in case of a data leak from the storage device **150,** since the data owner cannot be recognized with the changed identifiers:

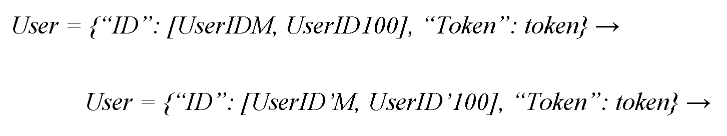

The converted identifiers UserID'100 and UserID'M are transferred in step **225d** to the storage device **150.** In the storage device **150,** the identifiers are linked with the user's data structure on the basis of identical tokens in step **226.** The storage device **150** links the received data structure with other data structures for this user in step **227:**

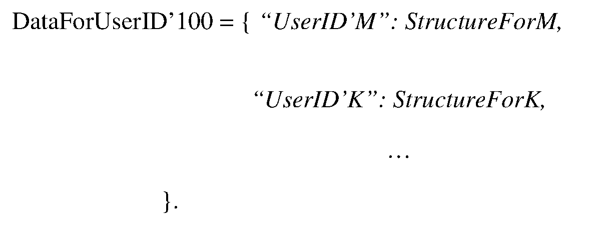

The data requests from the advertising network **M** for the processing of the data are then redirected to the storage device **150** through the anonymizer **160,** as shown in **Fig. 2b****.** As can be seen in **Fig. 2b****,** the request is sent by the server **102a** through the browser **102b** in step **230.** The request comprises a user identifier in the advertising network **M,** UserIDM. In step **240,** the request is redirected to the anonymizer **160.** When the request is redirected, the user identifier in the system **100** is attached to the request:

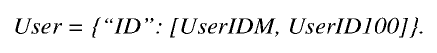

In step **241,** the anonymizer **160** converts the user identifier in the system **100** and the identifier in the advertising network **M:**

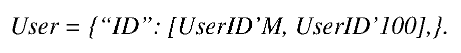

In step **242,** it transfers the converted identifiers to the storage device **150.** The storage device **150** detects, in step **243,** the data linked to the user, on the basis of UserID'100, and determines the rights for the advertising network M in step **250;** in the present example, this takes place by means of a search for UserID'M and its associated data structure. When the data are detected, they are returned, together with UserID'M, to the anonymizer **160** in step **251,** the anonymizer **160** returns the original value to the user identifier in the network **M** in step **252,** and the user's data, together with the original UserIDM, is transferred to the collected data processor **102** of the advertising network, while the occurrence of the transmission is recorded by the data tracker **180.**

In a particular case, the advertising network may contact the anonymizer directly without the redirection of requests by the device **101,** while in the present case the collected data processor itself redirects the request: instead of the device it contacts the storage device, in a particular case through the anonymizer. In another particular case, the data are not transferred to the collected data processor **102,** but access to a copy of the data placed in the storage device **150** is granted.

As noted above, the system shown in **Fig. 1** is also used for implementing the method of updating the user's data **300.** Thus, methods **200** and **300** are implemented using the system of **Fig. 1****.** This method is implemented when not all the data for processing are placed in the storage device and/or when the user has more than one device from which data may be received. For example, for method 300, in step **310,** the storage device **150** detects that the data for which the collected data processor **102** has received access rights are not located in the storage device **150.** In step **320,** therefore, the missing user's data are transferred from the device to the storage device **150.** In a particular case, when the absence of the data is detected, the storage device **150** contacts the data access rights manager **130.** The data access rights manager **130** updates the data model, in accordance with which the data collector **120** completes new fields in the structure (in our example, those relating to the location). The data access rights manager **130** then sends the data to the storage device **150.** In a particular case, the data are sent with the use of the modifier **140** (the modifier **140** carries out an analysis of the data for criticality and other conformity with the rights established by the data access rights manager **130)** and the anonymizer **160,** if the detected data require further conversion.

**Fig. 5** is a block diagram illustrating a computer system 20 on which examples of systems and methods for granting access to data of a user and for updating the data of a user may be implemented. The computer system 20 can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system 20 includes a central processing unit (CPU) 21, a system memory 22, and a system bus 23 connecting the various system components, including the memory associated with the central processing unit 21. The system bus 23 may comprise a bus memory or bus memory controller, a peripheral bus, and a local bus that is able to interact with any other bus architecture. Examples of the buses may include PCI, ISA, PCI-Express, HyperTransport^{™}, InfiniBand^{™}, Serial ATA, I²C, and other suitable interconnects. The central processing unit 21 (also referred to as a processor) can include a single or multiple sets of processors having single or multiple cores. The processor 21 may execute one or more computer-executable code implementing the techniques of the present disclosure. The system memory 22 may be any memory for storing data used herein and/or computer programs that are executable by the processor 21. The system memory 22 may include volatile memory such as a random access memory (RAM) 25 and non-volatile memory such as a read only memory (ROM) 24, flash memory, etc., or any combination thereof. The basic input/output system (BIOS) 26 may store the basic procedures for transfer of information between elements of the computer system 20, such as those at the time of loading the operating system with the use of the ROM 24.

The computer system 20 may include one or more storage devices such as one or more removable storage devices 27, one or more non-removable storage devices 28, or a combination thereof. The one or more removable storage devices 27 and non-removable storage devices 28 are connected to the system bus 23 via a storage interface 32. In an example, the storage devices and the corresponding computer-readable storage media are power-independent modules for the storage of computer instructions, data structures, program modules, and other data of the computer system 20. The system memory 22, removable storage devices 27, and non-removable storage devices 28 may use a variety of computer-readable storage media. Examples of computer-readable storage media include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system 20.

The system memory 22, removable storage devices 27, and non-removable storage devices 28 of the computer system 20 may be used to store an operating system 35, additional program applications 37, other program modules 38, and program data 39. The computer system 20 may include a peripheral interface 46 for communicating data from input devices 40, such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device 47 such as one or more monitors, projectors, or integrated display, may also be connected to the system bus 23 across an output interface 48, such as a video adapter. In addition to the display devices 47, the computer system 20 may be equipped with other peripheral output devices (not shown), such as loudspeakers and other audiovisual devices.

The computer system 20 may operate in a network environment, using a network connection to one or more remote computers 49. The remote computer (or computers) 49 may be local computer workstations or servers comprising most or all of the aforementioned elements in describing the nature of a computer system 20. Other devices may also be present in the computer network, such as, but not limited to, routers, network stations, peer devices or other network nodes. The computer system 20 may include one or more network interfaces 51 or network adapters for communicating with the remote computers 49 via one or more networks such as a local-area computer network (LAN) 50, a wide-area computer network (WAN), an intranet, and the Internet. Examples of the network interface 51 may include an Ethernet interface, a Frame Relay interface, SONET interface, and wireless interfaces.

Embodiment of the present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store program code in the form of instructions or data structures that can be accessed by a processor of a computing device, such as the computing system 20. The computer readable storage medium may be an electronic storage device, a magnetic storage device, an optical storage device, an electromagnetic storage device, a semiconductor storage device, or any suitable combination thereof. By way of example, such computer-readable storage medium can comprise a random access memory (RAM), a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer readable storage medium is not to be construed as being transitory signals per se, such as radio waves or other freely propagating electromagnetic waves, electromagnetic waves propagating through a waveguide or transmission media, or electrical signals transmitted through a wire.

Computer readable program instructions described herein can be downloaded to respective computing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer readable program instructions from the network and forwards the computer readable program instructions for storage in a computer readable storage medium within the respective computing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some examples, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform embodiments of the present disclosure.

In various examples, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a computer system (such as the one described in greater detail in **Fig. 5****,** above). Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while embodimetns and applications have been shown and described, it would be apparent to those skilled in the art having the benefit of this disclosure that many more modifications than mentioned above are possible without departing from the inventive concepts disclosed herein. The scope of the invention is defined by the independent claims.

## Claims

1. A method for granting access to data of a user, the method comprising:
blocking the processing of data of a user;
transferring the data of the user to a storage device (150);
receiving a request for data processing from a collected data processor (102) of a device;
redirecting the received request to the storage device (150);
determining, by the storage device (150), data access rights for the collected data processor (102) of the device from which the redirected request for data processing is received in accordance with data access rights established by a data access rights manager (130), wherein the determination of the data access rights comprises formulating rights of the collected data processors to access data, withdrawing data access rights from the collected data processors, and creating lists of collected data processors that are permitted to access the data; and
providing access to the data in accordance with the determined data access rights.

2. The method of claim 1, further comprising:
detecting an absence of the requested data; and
transferring information about the absent data to the storage device.

3. The method of claim 1, wherein the transferring of the data of the user to the storage device is performed through at least one of a route modifier (140) and an anonymizer (160),
wherein the route modifier analyzes the data in fields of data structure received from a data collector (120), divide the data structure into substructures in order to determine the state of the data, and select the route for sending data to the storage device (150) for the resulting substructure, and
wherein the anonymizer (160) anonymizes user identifiers.

4. The method of claim 1, wherein the request is processed without redirecting to the storage device (150) when the collected data processor (102) is on the list of trusted devices or when the request is related to a basic functionality accepted by a user device (101).

5. The method of claim 1, wherein the blocking of the processing includes blocking at least one of: mobile and web tracking; collecting geolocation information; collecting search queries; and collecting registration data.

6. The method of claim 1, wherein the blocking of the processing of the data blocks the processing by the collected data processor of an external device.

7. The method of claim 1, wherein the request for data processing is received from the collected data processor (102) implicitly by a blocker (110) or directly by the data access rights manager (130), and wherein when the request is received by the blocker, the request is forwarded to the data access rights manager.

8. A system (100) for granting access to data of a user, comprising:
at least one processor configured to:
block the processing of data of a user;
transfer the data of the user to a storage device (150);
receive a request for data processing from a collected data processor (102) of a device;
redirect the received request to the storage device (150);
determine, by the storage device, data access rights for the collected data processor of the device from which the redirected request for data processing is received in accordance with data access rights established by a data access rights manager (130), wherein the determination of the data access rights comprises formulating rights of the collected data processors to access data, withdrawing data access rights from the collected data processors, and creating lists of collected data processors that are permitted to access the data; and
provide access to the data in accordance with the determined data access rights.

9. The system of claim 8, wherein the processor is further configured to:
detect an absence of the requested data; and
transfer information about the absent data to the storage device (150).

10. The system of claim 8, wherein the transferring of the data of the user to the storage device is performed through at least one of a route modifier (140) and an anonymizer (160),
wherein the route modifier (140) analyzes the data in fields of data structure received from a data collector, divide the data structure into substructures in order to determine the state of the data, and select the route for sending data to the storage device for the resulting substructure, and
wherein the anonymizer (160) anonymizes user identifiers.

11. The system of claim 8, wherein the request is processed without redirecting to the storage device when the collected data processor is on the list of trusted devices or when the request is related to a basic functionality accepted by a user device (101).

12. The system of claim 8, wherein the blocking of the processing includes blocking at least one of: mobile and web tracking; collecting geolocation information; collecting search queries; and collecting registration data.

13. The system of claim 8, wherein the blocking of the processing of the data blocks the processing by the collected data processor of an external device.

14. The system of claim 8, wherein the request for data processing is received from the collected data processor implicitly by a blocker (110) or directly by the data access rights manager (130), and wherein when the request is received by the blocker, the request is forwarded to the data access rights manager.

## Patentansprüche

1. Verfahren zum Gewähren des Zugriffs auf Daten eines Benutzers, wobei das Verfahren umfasst:
Blockieren der Verarbeitung von Daten eines Benutzers;
Übertragen der Daten des Benutzers an eine Speicherungsvorrichtung (150);
Empfangen einer Anforderung zur Datenverarbeitung von einem Sammeldatenprozessor (102) einer Vorrichtung;
Umleiten der empfangenen Anforderung an die Speicherungsvorrichtung (150);
Bestimmen, durch die Speicherungsvorrichtung (150), von Datenzugriffsrechten für den Sammeldatenprozessor (102) der Vorrichtung, von der die umgeleitete Anforderung zur Datenverarbeitung empfangen wird, gemäß den von einem Datenzugriffsrechte-Manager (130) festgelegten Datenzugriffsrechten, wobei das Bestimmen der Datenzugriffsrechte das Formulieren von Rechten der Sammeldatenprozessoren zum Zugriff auf Daten, das Entziehen von Datenzugriffsrechten von den Sammeldatenprozessoren und das Erstellen von Listen von Sammeldatenprozessoren umfasst, denen der Zugriff auf die Daten gestattet ist; und
Bereitstellen des Zugriffs auf die Daten gemäß den bestimmten Datenzugriffsrechten.

2. Verfahren nach Anspruch 1, ferner umfassend:
Erkennen des Fehlens der angeforderten Daten; und
Übertragen von Informationen über die fehlenden Daten an die Speicherungsvorrichtung.

3. Verfahren nach Anspruch 1, wobei das Übertragen der Daten des Benutzers an die Speicherungsvorrichtung über mindestens eines von einem Routenmodifizierer (140) und einem Anonymisierer (160) durchgeführt wird,
wobei der Routenmodifizierer die Daten in Feldern einer von einem Datensammler (120) empfangenen Datenstruktur analysiert, die Datenstruktur in Unterstrukturen unterteilt, um den Zustand der Daten zu bestimmen, und die Route zum Senden von Daten an die Speicherungsvorrichtung (150) für die resultierende Unterstruktur auswählt, und
wobei der Anonymisierer (160) Benutzerkennungen anonymisiert.

4. Verfahren nach Anspruch 1, wobei die Anforderung ohne Umleiten an die Speicherungsvorrichtung (150) verarbeitet wird, wenn sich der Sammeldatenprozessor (102) auf der Liste vertrauenswürdiger Vorrichtungen befindet oder wenn sich die Anforderung auf eine von einer Benutzervorrichtung (101) akzeptierte Basisfunktionalität bezieht.

5. Verfahren nach Anspruch 1, wobei das Blockieren der Verarbeitung das Blockieren mindestens eines der folgenden einschließt: Mobil- und Web-Tracking; Sammeln von Geolokalisierungsinformationen; Sammeln von Suchanfragen; und Sammeln von Registrierungsdaten.

6. Verfahren nach Anspruch 1, wobei das Blockieren der Verarbeitung der Daten die Verarbeitung durch den Sammeldatenprozessor einer externen Vorrichtung blockiert.

7. Verfahren nach Anspruch 1, wobei die Anforderung zur Datenverarbeitung von dem Sammeldatenprozessor (102) implizit von einem Blocker (110) oder direkt von dem Datenzugriffsrechte-Manager (130) empfangen wird, und wobei die Anforderung, wenn die Anforderung von dem Blocker empfangen wird, an den Datenzugriffsrechte-Manager weitergeleitet wird.

8. System (100) zum Gewähren des Zugriffs auf Daten eines Benutzers, umfassend:
mindestens einen Prozessor, der konfiguriert ist zum:
Blockieren der Verarbeitung von Daten eines Benutzers;
Übertragen der Daten des Benutzers an eine Speicherungsvorrichtung (150);
Empfangen einer Anforderung zur Datenverarbeitung von einem Sammeldatenprozessor (102) einer Vorrichtung;
Umleiten der empfangenen Anforderung an die Speicherungsvorrichtung (150);
Bestimmen, durch die Speicherungsvorrichtung, von Datenzugriffsrechten für den Sammeldatenprozessor der Vorrichtung, von der die umgeleitete Anforderung zur Datenverarbeitung empfangen wird, gemäß den von einem Datenzugriffsrechte-Manager (130) festgelegten Datenzugriffsrechten, wobei das Bestimmen der Datenzugriffsrechte das Formulieren von Rechten der Sammeldatenprozessoren zum Zugriff auf Daten, das Entziehen von Datenzugriffsrechten von den Sammeldatenprozessoren und das Erstellen von Listen von Sammeldatenprozessoren umfasst, denen der Zugriff auf die Daten gestattet ist; und
Bereitstellen des Zugriffs auf die Daten gemäß den bestimmten Datenzugriffsrechten.

9. System nach Anspruch 8, wobei der Prozessor ferner konfiguriert ist zum:
Erkennen des Fehlens der angeforderten Daten; und
Übertragen von Informationen über die fehlenden Daten an die Speicherungsvorrichtung (150).

10. System nach Anspruch 8, wobei das Übertragen der Daten des Benutzers an die Speicherungsvorrichtung über mindestens eines von einem Routenmodifizierer (140) und einem Anonymisierer (160) durchgeführt wird,
wobei der Routenmodifizierer (140) die Daten in Feldern einer von einem Datensammler empfangenen Datenstruktur analysiert, die Datenstruktur in Unterstrukturen unterteilt, um den Zustand der Daten zu bestimmen, und die Route zum Senden von Daten an die Speicherungsvorrichtung für die resultierende Unterstruktur auswählt, und
wobei der Anonymisierer (160) Benutzerkennungen anonymisiert.

11. System nach Anspruch 8, wobei die Anforderung ohne Umleiten an die Speicherungsvorrichtung verarbeitet wird, wenn sich der Sammeldatenprozessor auf der Liste vertrauenswürdiger Vorrichtungen befindet oder wenn sich die Anforderung auf eine von einer Benutzervorrichtung (101) akzeptierte Basisfunktionalität bezieht.

12. System nach Anspruch 8, wobei das Blockieren der Verarbeitung das Blockieren mindestens eines der folgenden einschließt: Mobil- und Web-Tracking; Sammeln von Geolokalisierungsinformationen; Sammeln von Suchanfragen; und Sammeln von Registrierungsdaten.

13. System nach Anspruch 8, wobei das Blockieren der Verarbeitung der Daten die Verarbeitung durch den Sammeldatenprozessor einer externen Vorrichtung blockiert.

14. System nach Anspruch 8, wobei die Anforderung zur Datenverarbeitung von dem Sammeldatenprozessor implizit von einem Blocker (110) oder direkt von dem Datenzugriffsrechte-Manager (130) empfangen wird, und wobei die Anforderung, wenn die Anforderung von dem Blocker empfangen wird, an den Datenzugriffsrechte-Manager weitergeleitet wird.

## Revendications

1. Procédé d'octroi d'accès à des données d'un utilisateur, le procédé comprenant :
le blocage du traitement de données d'un utilisateur ;
le transfert des données de l'utilisateur vers un dispositif de stockage (150) ;
la réception d'une demande de traitement de données provenant d'un processeur de données collectées (102) d'un dispositif ;
la redirection de la demande reçue vers le dispositif de stockage (150) ;
la détermination, par le dispositif de stockage (150), de droits d'accès aux données pour le processeur de données collectées (102) du dispositif à partir duquel la demande de traitement de données redirigée est reçue conformément à des droits d'accès aux données établis par un gestionnaire de droits d'accès aux données (130), dans lequel la détermination des droits d'accès aux données comprend la formulation de droits des processeurs de données collectées pour accéder à des données, le retrait de droits d'accès aux données des processeurs de données collectées, et la création de listes de processeurs de données collectées autorisés à accéder aux données ; et
la fourniture d'un accès aux données conformément aux droits d'accès aux données déterminés.

2. Procédé selon la revendication 1, comprenant en outre :
la détection d'une absence des données demandées ; et
le transfert d'informations sur les données absentes vers le dispositif de stockage.

3. Procédé selon la revendication 1, dans lequel le transfert des données de l'utilisateur vers le dispositif de stockage est réalisé par l'intermédiaire d'au moins l'un parmi un modificateur d'itinéraire (140) et un anonymiseur (160),
dans lequel le modificateur d'itinéraire analyse les données dans des champs d'une structure de données reçue d'un collecteur de données (120), divise la structure de données en sous-structures afin de déterminer l'état des données, et sélectionne l'itinéraire d'envoi de données au dispositif de stockage (150) pour la sous-structure résultante, et
dans lequel l'anonymiseur (160) anonymise des identifiants d'utilisateur.

4. Procédé selon la revendication 1, dans lequel la demande est traitée sans la rediriger vers le dispositif de stockage (150) lorsque le processeur de données collectées (102) est sur la liste de dispositifs de confiance ou lorsque la demande est liée à une fonctionnalité de base acceptée par un dispositif utilisateur (101).

5. Procédé selon la revendication 1, dans lequel le blocage du traitement inclut le blocage d'au moins l'un parmi : le suivi mobile et Web ; la collecte d'informations de géolocalisation ; la collecte d'interrogations de recherche ; et la collecte de données d'enregistrement.

6. Procédé selon la revendication 1, dans lequel le blocage du traitement des données bloque le traitement par le processeur de données collectées d'un dispositif externe.

7. Procédé selon la revendication 1, dans lequel la demande de traitement de données est reçue du processeur de données collectées (102) implicitement par un bloqueur (110) ou directement par le gestionnaire de droits d'accès aux données (130), et dans lequel, lorsque la demande est reçue par le bloqueur, la demande est transmise au gestionnaire de droits d'accès aux données.

8. Système (100) d'octroi d'accès à des données d'un utilisateur, comprenant :
au moins un processeur configuré pour :
bloquer le traitement de données d'un utilisateur ;
transférer les données de l'utilisateur vers un dispositif de stockage (150) ;
recevoir une demande de traitement de données d'un processeur de données collectées (102) d'un dispositif ;
rediriger la demande reçue vers le dispositif de stockage (150) ;
déterminer, par le dispositif de stockage, des droits d'accès aux données pour le processeur de données collectées du dispositif à partir duquel la demande de traitement de données redirigée est reçue conformément à des droits d'accès aux données établis par un gestionnaire de droits d'accès aux données (130), dans lequel la détermination des droits d'accès aux données comprend la formulation de droits des processeurs de données collectées pour accéder à des données, le retrait de droits d'accès aux données des processeurs de données collectées, et la création de listes de processeurs de données collectées autorisés à accéder aux données ; et
fournir l'accès aux données conformément aux droits d'accès aux données déterminés.

9. Système selon la revendication 8, dans lequel le processeur est en outre configuré pour :
détecter une absence des données demandées ; et
transférer des informations sur les données absentes vers le dispositif de stockage (150).

10. Système selon la revendication 8, dans lequel le transfert des données de l'utilisateur vers le dispositif de stockage est réalisé par l'intermédiaire d'au moins l'un parmi un modificateur d'itinéraire (140) et un anonymiseur (160),
dans lequel le modificateur d'itinéraire (140) analyse les données dans des champs d'une structure de données reçue d'un collecteur de données, divise la structure de données en sous-structures afin de déterminer l'état des données, et sélectionne l'itinéraire d'envoi de données au dispositif de stockage pour la sous-structure résultante, et
dans lequel l'anonymiseur (160) anonymise des identifiants d'utilisateur.

11. Système selon la revendication 8, dans lequel la demande est traitée sans être redirigée vers le dispositif de stockage lorsque le processeur de données collectées est sur la liste des dispositifs de confiance ou lorsque la demande est liée à une fonctionnalité de base acceptée par un dispositif utilisateur (101).

12. Système selon la revendication 8, dans lequel le blocage du traitement inclut le blocage d'au moins l'un parmi : le suivi mobile et Web ; la collecte d'informations de géolocalisation ; la collecte d'interrogations de recherche ; et la collecte de données d'enregistrement.

13. Système selon la revendication 8, dans lequel le blocage du traitement des données bloque le traitement par le processeur de données collectées d'un dispositif externe.

14. Système selon la revendication 8, dans lequel la demande de traitement de données est reçue du processeur de données collectées implicitement par un bloqueur (110) ou directement par le gestionnaire de droits d'accès aux données (130), et dans lequel, lorsque la demande est reçue par le bloqueur, la demande est transmise au gestionnaire de droits d'accès aux données.
